# EUROPEAN PATENT APPLICATION

(11) **EP 2 116 439 A1**
(43) Date of publication of application: **11.11.2009**
(21) Application number: 08711615.8
(22) Date of filing: 20.02.2008
(51) Int. Cl.: B60W 30/06, B60R 1/00, B60R 21/00, B60W 10/04, B60W 30/00, F02D 29/02, F02D 45/00

(54) **VEHICLE TRAVEL SUPPORT DEVICE AND METHOD**

(30) Priority: 27.02.2007 JP 2007047546
(71) Applicant: Toyota Jidosha Kabushiki Kaisha, Toyota-shi, Aichi 471-8571 (JP)
(72) Inventor: MAKINO, Yasushi, Toyota-shi Aichi 471-8571 (JP); IWAKIRI, Hideyuki, Toyota-shi Aichi 471-8571 (JP); KUBOTA, Yuuichi, Toyota-shi Aichi 471-8571 (JP); ENDO, Tomohiko, Toyota-shi Aichi 471-8571 (JP); KAWABATA, Yukiko, Toyota-shi Aichi 471-8571 (JP); OMORI, Miyuki, Toyota-shi Aichi 471-8571 (JP); MORIIZUMI, Kiyotaka, Toyota-shi Aichi 471-8571 (JP)
(74) Representative: Intes, Didier Gérard André
(86) International application number: PCT/JP2008/052809
(87) International publication number: WO 2008/105283

(57) **Abstract**

The object of the present invention is to provide a vehicle drive assist apparatus with high convenience in which torque-up is performed only if there is an instruction from the driver. The present invention is **characterized by** a vehicle drive assist apparatus (10) for assisting in driving a vehicle by varying a drive torque of wheels, comprising torque-up means (36, 38) for increasing the drive torque; and switching means (12) for switching, in accordance with an input from a vehicle occupant, a status of control between a first status in which the torque-up means is operational and a second status in which the torque-up means is not operational.

## Description

### TECHNICAL FIELD

The present invention is related to a vehicle drive assist apparatus and method for assisting in driving a vehicle by varying a drive torque of wheels.

### BACKGROUND ART

JP2003-205808 A discloses a parking assist apparatus which includes torque-up means for increasing an engine generating torque by a predetermined torque when an accelerator pedal is not depressed ("off") in order to enlarge a control range of a vehicle speed based on only the brake operation. According to this parking assist apparatus, when a driver presses down on the brake pedal and operates a shift lever to a reverse position, an instruction for performing torque-up of the engine is transmitted to an engine ECU from a parking assist ECU.

When a step or a steep gradient exists in a path along which traveling in reverse is intended, there may be a case where the vehicle cannot surmount the step or a case where the vehicle cannot climb the steep gradient even if maximum torque is generated when a brake pedal is not depressed.

Regarding this, since the parking assist apparatus disclosed in JP2003-205808 A has the torque-up means for increasing an engine generating torque at the time when the accelerator pedal is not depressed by a predetermined torque, it may be possible to avoid a situation in which the vehicle cannot surmount the step or the like if the engine generating torque at the time when the accelerator pedal is not depressed is increased up to a torque which enables the vehicle to surmount the step.

However, in the parking assist apparatus disclosed in JP2003-205808 A, torque-up is performed in response to stepping on the brake pedal and setting the shift lever to a reverse position (R) which are always performed at the beginning of traveling in reverse, and therefore torque-up is always performed at the time of traveling in reverse. Therefore, in the parking assist apparatus disclosed in JP2003-205808 A torque-up is implemented even if the driver doesn't desire it, and thus there may be a case in which convenience is reduced. For example, if the engine generating torque at the time when the accelerator pedal is not depressed is increased up to a torque which enables the vehicle to surmount the step in the parking assist apparatus disclosed in JP2003-205808 A, convenience is increased under road circumstances having steps or steep gradients; however, convenience is conversely diminished under flat road circumstances, because under the flat road circumstances an increase in a vehicle speed at the time when the accelerator pedal is not depressed is promoted and thus the parking assist may be terminated due to upper limit of the vehicle speed or the driver may become anxious due to unpredicted increase in a vehicle speed.

### DISCLOSURE OF INVENTION

Therefore, an object of the present invention is to provide a vehicle drive assist apparatus and a method with high convenience in which torque-up is performed only if there is an instruction from the driver.

In order to achieve the aforementioned objects, according to the first aspect of the present invention, a vehicle drive assist apparatus for assisting in driving a vehicle by varying a drive torque of wheels is provided which comprises;
torque-up means for increasing the drive torque; and
switching means for switching, in accordance with an input from a vehicle occupant, a status of control between a first status in which the torque-up means is operational and a second status in which the torque-up means is not operational.

According to the second aspect of the present invention, in the first aspect of the present invention, the switching means forms the first status, if there is an input of a torque-up instruction from the vehicle occupant and the vehicle is at a standstill.

According to the third aspect of the present invention, in the first aspect of the present invention, the torque-up means increases the drive torque when a parking assist control is performed.

According to the fourth aspect of the present invention, in the first aspect of the present invention, the torque-up means increases the drive torque at the time of driving in reverse when a parking assist control is performed.

According to the fifth aspect of the present invention, in the first aspect of the present invention, the input from the vehicle occupant is an input via a switch provided in a cabin of the vehicle or a speech input.

According to the sixth aspect of the present invention, in the first aspect of the present invention, the vehicle drive assist apparatus further comprises parking assist suspending means for suspending a parking assist control if an accelerator pedal is depressed while the parking assist control is performed, and the torque-up means increases the drive torque when a parking assist control is performed.

According to the seventh aspect of the present invention, a vehicle drive assist apparatus for assisting in driving a vehicle by varying a drive torque of wheels is provided, in which the apparatus forms a status in which a torque-up for increasing the drive torque is operational, if there is an input of a torque-up instruction from the vehicle occupant and the vehicle is at a standstill.

According to the eighth aspect of the present invention, a vehicle drive assist method of assisting in driving a vehicle by varying a drive torque of wheels is provided, in which the method comprises;
a step for inputting an instruction for torque-up from a vehicle occupant; and
a step for forming a state in which torque-up for increasing the drive torque is operational, if the instruction for torque-up is inputted and the vehicle is at a standstill.

According to the present invention, it is possible to obtain a vehicle drive assist apparatus with high convenience in which torque-up is performed only if there is an instruction from the driver.

### BRIEF DESCRIPTION OF THE DRAWINGS

These and other objects, features, and advantages of the present invention will become more apparent from the following detailed description of preferred embodiments given with reference to the accompanying drawings, in which:
Fig. 1 is a system diagram of an embodiment of a vehicle drive assist apparatus 10 according to the present invention;
Fig. 2 is a flowchart of a fundamental process implemented by a parking assisting ECU 12 at the time of parking assistance;
Fig. 3 is a diagram for illustrating an example of a screen for setting a target parking position, and other items, for tandem type parking; and
Fig. 4 is a flowchart of an example of a torque-up control.

### EXPLANATION FOR REFERENCE NUMBER

- 10: vehicle drive assist apparatus
- 12: parking assisting ECU
- 16: steering angle sensor
- 18: vehicle speed sensor
- 20: rear camera
- 22: display
- 24: speaker
- 30: EPS ECU
- 32: motor
- 34: torque sensor
- 36: EFI ECU

- 38: engine
- 39: accelerator position sensor
- 40: brake ECU
- 42: brake switch
- 50: reverse shift switch
- 52: parking switch
- 54: torque-up switch
- 80: target parking frame

### BEST MODE FOR CARRYING OUT THE INVENITON

In the following, the best mode for carrying out the present invention will be described in detail by referring to the accompanying drawings.

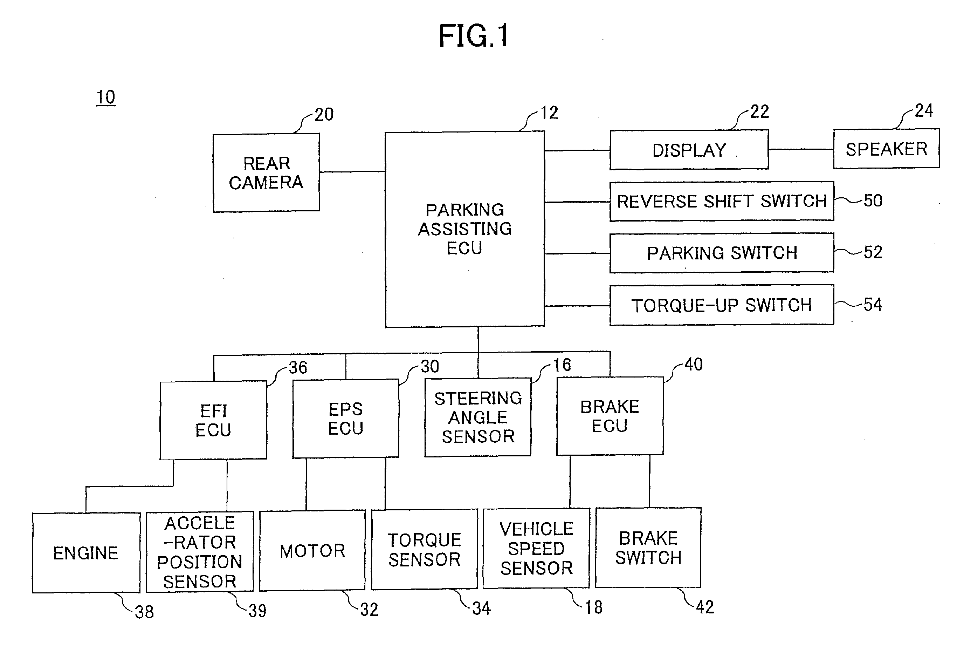

Fig. 1 is a system diagram of an embodiment of a vehicle drive assist apparatus 10 according to the present invention. As shown in Fig. 1, the vehicle drive assist apparatus 10 is comprised mainly of an electronic control unit 12 (hereafter referred to as a parking assisting ECU 12). The parking assisting ECU 12 is comprised mainly of a microprocessor that includes a CPU, a ROM, a RAM, etc., (not shown) which are interconnected via appropriate buses. In the ROM are stored the computer readable programs to be carried out by the CPU and data.

The parking assisting ECU 12 is connected to a steering angle sensor 16 for detecting a steering angle of a steering wheel (not shown), an EPS ECU 30 for controlling a motor 32 of a power steering apparatus, an EFI ECU 36 for controlling an engine 38, a brake ECU 40 for controlling brake actuators, etc., via an adequate bus such as CAN (Controller Area Network) or high speed communication bus, etc. The motor 32 may be disposed in a steering column for rotating a steering shaft by its rotation. The EFI ECU 36 is connected to an accelerator position sensor 39 for detecting an amount of operation of an accelerator pedal. The EPS ECU 30 is connected to a torque sensor 34 for detecting a steering torque of the steering wheel. The brake ECU 40 is connected to a vehicle speed sensor 18 for detecting a vehicle speed and a brake switch which outputs an ON signal when the brake pedal is operated. The accelerator position sensor 39 may be a sensor for detecting the operated stroke of the accelerator pedal, or may be a throttle position sensor.

Further, the parking assisting ECU 12 is connected to a rear camera 20 for imaging a scene of a predetermined angular range behind the vehicle, and a display 22 disposed in the cabin of the vehicle. The display 22 is connected to speakers 24.

The parking assisting ECU 12 is also connected to a reverse shift switch 50 and a parking switch 52. The reverse shift switch 50 outputs an ON signal when a shift lever is shifted to the reverse position and otherwise outputs an OFF signal. The parking switch 52 is provided in the cabin of the vehicle so as to allow a user in the cabin to operate it. The parking switch 52 outputs an OFF signal in its normal state and outputs an ON signal when operated by the user. The parking assisting ECU 12 determines whether the user needs assistance in parking the vehicle based on the output signal of the parking switch 52.

The parking assisting ECU 12 is also connected to a torque-up switch 54. The torque-up switch 54 is disposed at a position where the driver in the cabin of the vehicle can operate it. For example, the torque-up switch 54 may be disposed at an instrument panel, a console box, a steering wheel or the like. Alternatively, the torque-up switch 54 may be implemented by a touch switch which is set in a touch panel of the display 22, if the display 22 is a display of a touch panel type. The torque-up switch 54 has a function of transmitting to the parking assisting ECU 12 an intention of the user (which is a driver in a typical situation) as to whether he/she needs torque-up. For example, the torque-up switch 54 outputs an OFF signal in its normal state and outputs an ON signal when operated by the user. The parking assisting ECU 12 determines whether the user needs torque-up based on the output signal of the torque-up switch 54.

It is noted that the torque-up switch 54 is not necessarily an on/off type switch and may be a one which specifies a target torque on a scale of more than two. For example, it may be possible to specify one of two target torques according to a large or small level in a step or an ascent.

Next, a fundamental process implemented by the parking assisting ECU 12 at the time of parking assistance is described.

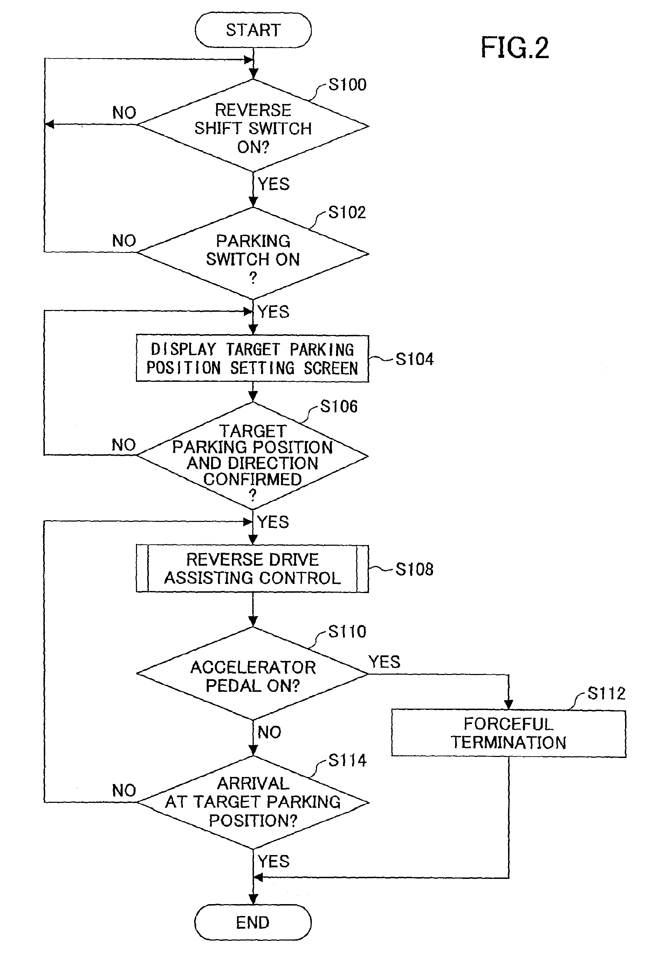

Fig. 2 is a flowchart of a fundamental process implemented by the parking assisting ECU 12 at the time of parking assistance.

In step 100, the parking assisting ECU 12 determines whether the reverse shift switch 50 is turned on. If it is determined that the reverse shift switch 50 is turned on, the process routine goes to step 102. Otherwise, the process routine at this interval terminates without doing anything.

In step 102, the parking assisting ECU 12 determines whether the parking switch 52 is turned on. If it is determined that the parking switch 52 is turned on, the process routine goes to step 104. Otherwise, the process routine at this interval terminates without doing anything.

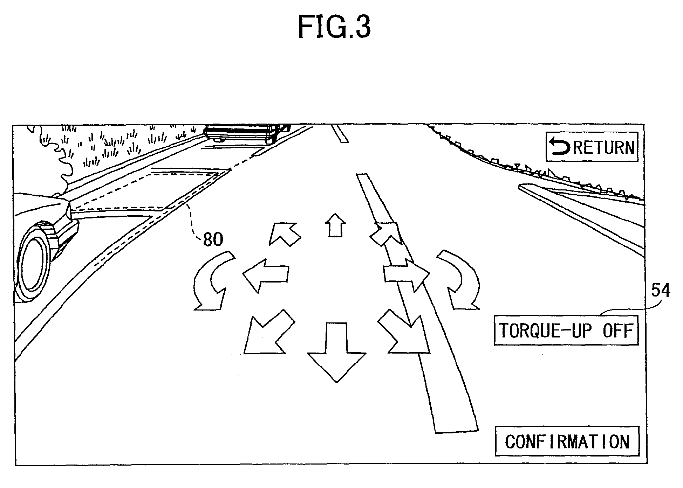

In step 104, the parking assisting ECU 12 displays a target parking position setting screen on the display 22. Specifically, the parking assisting ECU 12 displays an image (i.e., a real image) captured by the rear camera 20 on the display 22 and superimposes a target parking frame 80 on the image, as shown in Fig. 3 (which shows a screen for tandem type parking). The target parking frame 80 may be a pictorial display which imitates an actual parking frame or an outside shape of the vehicle. For example, the target parking frame 80 has a form of which the position and direction can be recognized by the users. The position and direction of the target parking frame 80 may be adjusted with touch switches, etc., for moving the target parking frame in lateral and longitudinal directions and in directions of rotation, as shown in Fig. 3, before operating a confirmation switch.

Further, in an example shown in Fig. 3, the torque-up switch 54 is set in the target parking position setting screen. The torque-up switch 54 shown in Fig. 3 represents a status in which torque-up described later is prohibited (i.e., "torque-up OFF"), and the torque-up switch 54 reverses to a status in which torque-up is permitted (i.e., "torque-up ON") when it is touched by the user. In this way, the user can determine based on the display status of the torque-up switch 54 whether torque-up is to be performed at the time of subsequent driving in reverse. For example, the user may turn the torque-up switch 54 on in a case where the user determines that torque-up is necessary, such as a case where the user finds a step or a steep ascent in a path of driving in reverse toward a target parking position. Further, user may keep the torque-up switch 54 in its off state, if there is no step or steep ascent in a path of driving in reverse toward a target parking position and thus the user determines that torque-up is not necessary. It is noted that the display "torque-up OFF" may represent a status of the torque-up switch 54 which is disposed at a different position.

Reference is made to Fig. 2 again. In the next step 106, the parking assisting ECU 12 determines whether the position and direction of the target parking frame 80 are confirmed. In this example, the parking assisting ECU 12 determines that the position and direction of the target parking frame 80 are confirmed when the confirmation switch shown in Fig. 3 is operated by a user. If the position and direction of the target parking frame 80 are confirmed, the process routine goes to step 108. Then, the parking assisting ECU 12 determines the target parking position and the target parking direction based on the position and direction of the confirmed target parking frame 80, and determines a target track based on the determined target parking position and target parking direction in advance. If the position and direction of the target parking frame 80 have not been confirmed yet, the process routine returns to step 104 to continue the setting process of the target parking position, etc.

In step 108, the parking assisting ECU 12 performs reverse drive assisting control. It is noted that the status in which the user can operate the torque-up switch 54 is maintained while the reverse drive assisting control is performed. This is because there may be a case in which the user finds a step or the like afterward which cannot be surmounted with the current reverse driving creep torque.

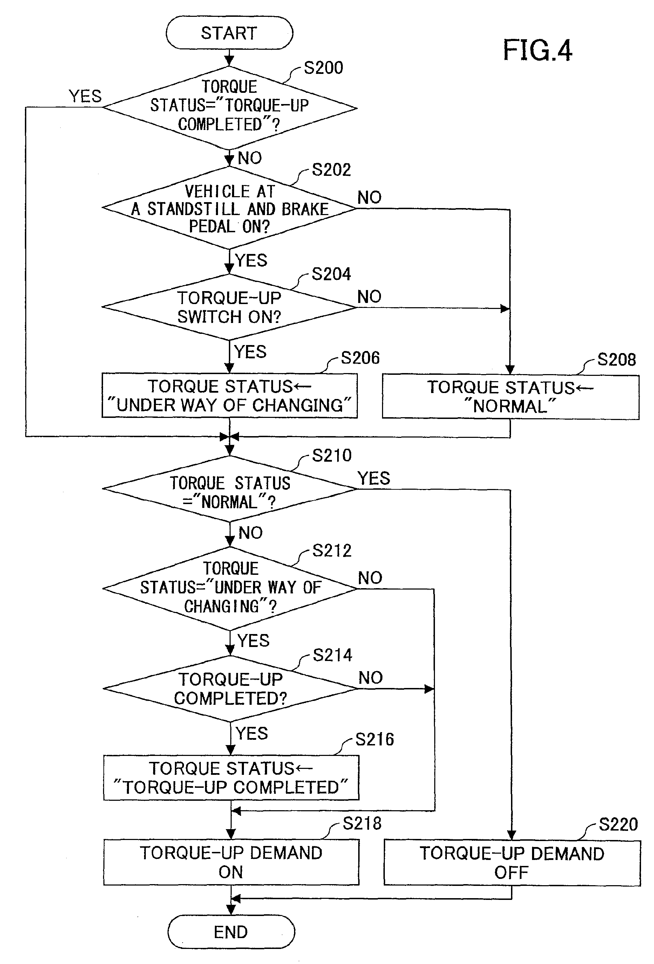

The reverse drive assisting control includes steering assisting control for assisting steering operation at the time of driving in reverse and torque-up control explained later with reference to Fig. 4. The steering assisting control may be as follows, for example. When the brake pedal is no longer depressed, allowing for a reverse driving creep torque to be generated, and therefore the vehicle starts to roll backward, the parking assisting ECU 12 estimates the position of the vehicle during the parking assist control using the travel distance of the vehicle derived from the output signals of the vehicle speed sensor 18 and the steering position derived from the output signals of the steering angle sensor 16. Then, the parking assisting ECU 12 calculates a target steering angle as a function of the amount of departure of the estimated vehicle position from the target track. The parking assisting ECU 12 transmits the calculated target steering angle to the EPS ECU 30. The EPS ECU 30 controls the motor 32 so as to implement the target steering angle.

In step 110, the parking assisting ECU 12 determines whether the accelerator pedal is depressed based on the information of the accelerator position sensor 39 obtained via the EFI ECU 36. If it is determined that the accelerator pedal is depressed, the process routine goes to step 112, while if it is determined that the accelerator pedal is not depressed, the process routine goes to step 114.

In step 112, the parking assisting ECU 12 immediately discontinues (i.e., forcefully terminates) the reverse drive assisting control currently in progress. It is noted that the discontinuation or forceful termination of the reverse drive assisting control may be implemented in other situations, such as when an obstacle is detected, when the vehicle speed exceeds a predetermined upper limit, when the operation of the steering wheel with a torque exceeding a torque predetermined by the user is detected based on the torque sensor 34, etc.

In step 114, the parking assisting ECU 12 determines whether the vehicle has arrived at the target parking position based on the estimation result of the vehicle position. If it is determined that the vehicle has arrived at the target parking position, the parking assisting ECU 12 requests the driver to stop the vehicle via the speaker 24 for example (or automatically stops the vehicle via the brake ECU 40), and then the parking assisting process is completed. If it is determined that the vehicle has not arrived at the target parking position yet, the process routine returns to step 108 to continue the reverse drive assisting control.

Fig. 4 is a flowchart of an example of a torque-up control which is performed as a part of the reverse drive assisting control in step 108 in Fig. 2. The process routine shown in Fig. 4 is executed repeatedly while the aforementioned reverse drive assisting control is continued. However, the process routine shown in Fig. 4 may be initiated before an affirmative determination in step 106 in Fig. 2 is made. For example, the process routine shown in Fig. 4 may be initiated simultaneously with the process in step 104.

In step 200, the parking assisting ECU 12 determines whether a flag representative of a torque status is "torque-up completed". The torque status "torque-up completed" represents a status where the EFI ECU 36 completes torque-up to a target torque. If the torque status is "torque-up completed", the process routine skips to step 210. Otherwise, the process routine goes to step 202.

In step 202, the parking assisting ECU 12 determines whether the vehicle is at a standstill and the brake pedal is depressed based on the output signal of the vehicle speed sensor 18 and the output signal of the brake switch 42. For example, if the vehicle speed detected by the vehicle speed sensor 18 is zero and the brake switch 42 is in its ON state, the parking assisting ECU 12 determines that the vehicle is at a standstill and the brake pedal is depressed. Then, the process routine goes to step 204. If at least one of these requirements is not met, the process routine goes to step 208. It is noted that whether the vehicle is at a standstill may be determined based on the output signals of an acceleration sensor or a yaw rate sensor (for example, the respective differential values), speed information obtained from GPS signals, the rotational speed of the output shaft of the transmission or the like, other than the output signal of the vehicle speed sensor 18. Similarly, whether the brake pedal is depressed may be determined based on the detection results of a brake master cylinder pressure.

In step 204, the parking assisting ECU 12 determines whether the torque-up switch 54 is in its ON state. If the torque-up switch 54 is in its ON state, the process routine goes to step 206. On the other hand, if the torque-up switch 54 is not in its ON state (i.e., if the torque-up switch 54 is in its OFF state), the process routine goes to step 208.

In step 206, the parking assisting ECU 12 sets the flag representative of a torque status to "under way of changing". Then, the process routine goes to step 210. The torque status "under way of changing" represents a transient status where the EFI ECU 36 does not complete torque-up to a target torque. In other words, the torque status "under way of changing" represents a status in which torque-up to a target torque is being performed but not yet completed. It is noted that the reason why the torque status "under way of changing" is prepared is because it takes time to some degree to complete torque-up to a target torque from the starting of the torque-up and such a transient status is taken into consideration.

In step 208, the parking assisting ECU 12 set the flag representative of a torque status to "normal" and the process routine goes to step 210. The torque status "normal" represents a status where the EFI ECU 36 doesn't perform torque-up to a target torque. In other words, the torque status "normal" represents a status where the torque-up is prohibited.

In step 210, the parking assisting ECU 12 determines whether the flag representative of the current torque status is "normal". If the flag representative of the current torque status is "normal", the process routine goes to step 220. Otherwise, the process routine goes to step 212.

In step 212, the parking assisting ECU 12 determines whether the flag representative of the current torque status is "under way of changing". If the flag representative of the current torque status is "under way of changing", the process routine goes to step 214. If the flag representative of the current torque status is not "under way of changing", the process routine goes to step 218.

In step 214, the parking assisting ECU 12 determines whether the EFI ECU 36 completes torque-up to a target torque based on information obtained via communication with the EFI ECU 36. If the torque-up to the target torque by the EFI ECU 36 is completed, the process routine goes to step 216. On the other hand, if the torque-up to the target torque by the EFI ECU 36 is not completed, the process routine goes to step 218.

In step 216, the parking assisting ECU 12 sets the flag representative of a torque status to "torque-up completed". Then, the process routine goes to step 218. It is noted that at that time the parking assisting ECU 12 may output information that notifies that torque-up is completed via the display 22 or the speaker 24, for example. With this arrangement, the driver can start driving in reverse by releasing the brake pedal when the torque-up is completed.

In step 218, the parking assisting ECU 12 turns on a torque-up demand for the EFI ECU 36. For example, the parking assisting ECU 12 transmits an instruction for performing torque-up to the EFI ECU 36. In response to this, the EFI ECU 36 controls the RPM of the engine 38 so that the reverse driving creep torque may become a target torque. For example, since the relationship between the RPM of the engine 38 at idle and the reverse driving creep torque generated at that time can be derived in advance, the EFI ECU 36 controls the RPM of the engine 38 so as to implement a target RPM corresponding to the target torque. It is noted that the reverse driving creep torque is a torque which is generated when a shift lever is in a reverse position and both of the accelerator pedal and the brake pedal are not depressed, and is a torque which is generated due to the existence of a torque converter in automatic transmission vehicles. It is noted that if the torque-up switch 54 is configured such that more than two target torques can be specified, the parking assisting ECU 12 transmits the specified target torque together with an instruction for performing torque-up to the EFI ECU 36.

In step 220, the parking assisting ECU 12 turns off the torque-up demand for the EFI ECU 36. For example, the parking assisting ECU 12 transmits an instruction for stopping torque-up to the EFI ECU 36. In response to this, depending on the current situation of torque up, the EFI ECU 36 stops torque up if the torque up is in progress, and maintains the current inactive status if the torque up is not in progress. It is noted that the stopping of torque up during the traveling of the vehicle may be implemented such that the RPM gradually returns to the original normal RPM (i.e., the RPM corresponding to the reverse driving creep torque in a normal status) in order to prevent the driver from feeling anything abnormal due to a sharp drop in a reverse driving creep torque. Alternatively, if the instruction for stopping torque-up is generated due to the switching of the torque-up switch 54 from its ON state to its OFF state, the RPM gradually returns to the original normal RPM, while if the instruction for stopping torque-up is generated due to the starting of movement of the vehicle under the situation in which the torque-up switch 54 is maintained in its ON state, the current RPM (i.e., the reverse driving creep torque in the course of increasing) may be maintained. In the latter case, if the vehicle stops again afterward, the torque-up to a target RPM from the maintained RPM is restarted in the above-mentioned step 218 by setting the flag representative of a torque status to "under way of changing" in the above-mentioned step 206.

According to the vehicle drive assist apparatus 10 of this embodiment, the following effect among others can be obtained.

According to the embodiment, it is possible to implement the configuration in which torque-up is performed only when the user desires it because the torque-up switch 54 which can be operated by the user is provided. Thus, the user turns on the torque-up switch 54 in a situation in which torque-up is necessary due to the existence of steps or the like while turns off the torque-up switch 54 in a situation in which torque-up is not necessary because of the absence of steps or the like (i.e., a flat road). In this way, the user can perform driving in reverse with reverse driving creep torque according to difference in situations. With this arrangement, it becomes possible to avoid inconvenience which would occur when torque-up is performed in unnecessary situations, such as inconvenience which would occur when the reverse drive assisting control is forcefully terminated unintentionally because the vehicle speed increases due to the torque up, and inconvenience which would occur when the driver becomes anxious due to unpredicted increase in a vehicle speed, for example, as well as inconvenience which would occur when the steps cannot be surmounted or the ascent cannot be climbed.

Further, according to the present embodiment, as described above, torque-up is not implemented when the vehicle is not at a standstill even if the torque-up switch 54 is in its ON state. Therefore, it is possible to prevent the reverse driving creep torque from rapidly changing during reverse driving of the vehicle. Further, torque-up is not implemented when the vehicle is not at a standstill even if the torque-up switch 54 is in its ON state. Therefore, it is possible to prevent unnecessary torque-up during reverse driving of the vehicle even if the driver inadvertently turns on the torque-up switch 54 during reverse driving of the vehicle.

It is noted that in the respective embodiments mentioned above the "torque-up means" recited in the appended claims is implemented by the EFI ECU 36 in association with the engine 38, the "switching means" recited in the appended claims is implemented by the parking assisting ECU 12. The "first status" recited in the appended claims is implemented by the parking assisting ECU 12 when the parking assisting ECU 12 performs the process of step 206 in Fig. 4, and the "second status" recited in the appended claims is implemented by the parking assisting ECU 12 when the parking assisting ECU 12 performs the process of step 208 in Fig. 4. Further, the "input from a vehicle occupant" recited in the appended claims is implemented when the user operates the torque-up switch 54, and the "input of a torque-up instruction from the vehicle occupant" is implemented when the user turns on the torque-up switch 54. Further, the "parking assist suspending means" recited in the appended claims is implemented by the parking assisting ECU 12 when the parking assisting ECU 12 performs the process of step 112 in Fig. 2.

The present invention is disclosed with reference to the preferred embodiments. However, it should be understood that the present invention is not limited to the above-described embodiments, and variations and modifications may be made without departing from the scope of the present invention.

For example, although in the above-described embodiments it is assumed that the vehicle is provided with an automatic transmission and the engine as a driving source of the wheels, the present invention can be applied to a hybrid vehicle or an electric vehicle having an electric motor as a driving source of the wheels. In this case, torque-up may be implemented by increasing the rotational torque of the electric motor with respect to the normal state. It is noted that each electric motor may be incorporated in each of the wheels independently, or the electric motor may be shared among the wheels.

Further, although in the above-described embodiments the torque-up instruction from the user is implemented by the user's operation for turning on the torque-up switch 54, the torque-up instruction from the user may be implemented by speech input using a speech recognition device, or by making an image recognition device recognize a predetermined gesture representative of the torque-up instruction. Further, although in the above-described embodiments the instruction from the user for obviating the necessity of torque-up is implemented by the user's operation for turning off the torque-up switch 54, the same is true for it as for the torque-up instruction.

Further, although in the above-described embodiments the reverse drive assisting control is initiated when the parking switch 52 is turned on, the present invention is not limited to this configuration. For example, the reverse drive assisting control may be initiated if the vehicle speed becomes 0 and after that the reverse shift switch 50 is turned on in such a situation where parking space around the vehicle is detected by the ultrasonic sensor or an image sensor or it is determined that the vehicle position is located in the parking area based on the map data of a navigation device, even in the condition where the parking switch 52 is not turned on. In this case, such a configuration where there is no parking switch 52 can be contemplated.

Further, although in the above-described embodiments the reverse driving is assisted during the parking operation, the present invention can be applied to assistance for driving in reverse other than parking operation or to assistance for forward driving during the parking assistance. For example, in such parking assistance in which the vehicle moves in a forward direction toward the parking start position and then moves in reverse toward the target parking position, the present invention is applied to the assistance during the forward driving as well as the reverse driving. It is noted that in the case of the forward driving, the forward driving creep torque may be increased in a similar manner in response to a torque-up instruction from the user.

Further, in the above-described embodiments, any requirement other than that the torque-up switch 54 is turned on or that the vehicle is at a standstill may be added as a new requirement which should be met in order to perform torque-up. For example, a requirement that there is a step or a steep ascent in a path for reverse driving detected by means of the rear camera 20 or an acceleration sensor, for example, may be added as a new requirement which should be met in order to perform torque-up. It is noted that if a step or a steep ascent in a path for reverse driving is detected, torque-up may be implemented only in a necessary situation such as a situation in which the vehicle is on the verge of the step.

The present application is based on Japanese Priority Application No. 2007-47546, filed on February 27, 2007, the entire contents of which are hereby incorporated by reference.

## Claims

1. A vehicle drive assist apparatus for assisting in driving a vehicle by varying a drive torque of wheels, comprising:
torque-up means for increasing the drive torque; and
switching means for switching, in accordance with an input from a vehicle occupant, a status of control between a first status in which the torque-up means is operational and a second status in which the torque-up means is not operational.

2. The vehicle drive assist apparatus as claimed in claim 1, wherein the switching means forms the first status, if there is an input of a torque-up instruction from the vehicle occupant and the vehicle is at a standstill.

3. The vehicle drive assist apparatus as claimed in claim 1, wherein the torque-up means increases the drive torque when a parking assist control is performed.

4. The vehicle drive assist apparatus as claimed in claim 1, wherein the torque-up means increases the drive torque at the time of driving when in reverse a parking assist control is performed.

5. The vehicle drive assist apparatus as claimed in claim 1, wherein the input from the vehicle occupant is an input via a switch provided in a cabin of the vehicle or a speech input.

6. The vehicle drive assist apparatus as claimed in claim 1 further comprising parking assist suspending means for suspending a parking assist control if an accelerator pedal is depressed while the parking assist control is performed, and wherein the torque-up means increases the drive torque when the parking assist control is performed.

7. A vehicle drive assist apparatus for assisting in driving a vehicle by varying a drive torque of wheels for parking,
wherein the apparatus forms a status in which torque-up for increasing the drive torque is operational, if there is an input of a torque-up instruction from the vehicle occupant and the vehicle is at a standstill.

8. A vehicle drive assist method of assisting in driving a vehicle by varying a drive torque of wheels for parking, comprising:
a step for inputting an instruction for torque-up from a vehicle occupant; and
a step for forming a status in which torque-up for increasing the drive torque is operational, if the instruction for torque-up is inputted and the vehicle is at a standstill.
